# EUROPEAN PATENT APPLICATION

(11) **EP 2 511 000 A1**
(43) Date of publication of application: **17.10.2012**
(21) Application number: 12164070.0
(22) Date of filing: 13.04.2012
(51) Int. Cl.: B01D 53/10, B01D 53/64, B01D 46/24, B01D 46/52, B01D 46/54

(54) **Improved utilization of powdered sorbent for mercury control from coal-fired power plants**

(30) Priority: 15.04.2011 US 201113087726
(71) Applicant: BHA Group Holdings Inc., Kansas City, MO 64133 (US)
(72) Inventor: Bansal, Vishal, Overland Park, KS 66223 (US); Maly, Peter Martin, Lake Forest, CA 92630 (US); Taylor, Robert Warren, Ponte Vedra Beach, FL 32082 (US)
(74) Representative: Picker, Madeline Margaret

(57) **Abstract**

A method and an associated system (10) for improving mercury removal from a flow containing combustion exhaust. The method includes providing a filtration arrangement (12), including providing at least one layer (76) of ePTFE; and configuring the at least one ePTFE layer (76) to have a geometry (48) that retains at least some accumulated particulate matter (100). The method includes providing at least some particulate matter in the flow for accumulation on the filtration arrangement (12) by the geometry (48).

## Description

### BACKGROUND OF THE INVENTION

The present invention relates generally to air filtration, and more particularly to air filtration that provides for improved fly ash and/or mercury emission control.

Air filters are known and used in many different applications, including use within filtration arrangements associated with combustion devices, such as coal-fired boilers. The air filters are capable of filtering particulate matter, such as fly ash, from combustion exhaust.

It is known that some combustion fuels, such as coal, include mercury. It is desirable to control the amount of mercury proceeding from a combustion device and through an air filter.

Some known filters do have a sufficient ability to entrap mercury during air filtration. Also, it is known to add a sorbent, such as activated carbon, into the combustion exhaust gas prior to or other ash-removal processing in an effort to help entrap the mercury and thus remove the mercury from the combustion exhaust.

It is known that fly ash removed from the combustion exhaust gas is a commodity that has some value. For example, fly ash can be utilized within a cement manufacture process. As such, operations (electrical generation facilities) that have combustion devices often sell fly ash as a supplementary revenue source. However, presence of sorbents for mercury control may tend to influence the value of the fly ash. Also, in general there may be desire to improve emissions of mercury. As such there is need for improvements in handling/processing of combustion products that yields fly ash and/or concern mercury control.

### BRIEF DESCRIPTION OF THE INVENTION

The following presents a simplified summary of the invention in order to provide a basic understanding of some example aspects of the invention. This summary is not an extensive overview of the invention. Moreover, this summary is not intended to identify critical elements of the invention nor delineate the scope of the invention. The sole purpose of the summary is to present some concepts of the invention in simplified form as a prelude to the more detailed description that is presented later.

In accordance with one aspect, the present invention provides a system for improved mercury removal from a flow containing combustion exhaust. The system includes a filtration arrangement including at least one layer of ePTFE, with the at least one ePTFE layer being configured to have a geometry that retains at least some accumulated particulate matter. The system includes an arrangement for providing at least some particulate matter in the flow for accumulation on the filtration arrangement by the geometry.

In accordance with another aspect, the present invention provides a method of improving mercury removal from a flow containing combustion exhaust. The method includes providing a filtration arrangement, including providing at least one layer of ePTFE; and configuring the at least one ePTFE layer to have a geometry that retains at least some accumulated particulate matter. The method includes providing at least some particulate matter in the flow for accumulation on the filtration arrangement by the geometry.

### BRIEF DESCRIPTION OF THE DRAWINGS

The foregoing and other aspects of the present invention will become apparent to those skilled in the art to which the present invention relates upon reading the following description with reference to the accompanying drawings, in which:
Fig. 1 schematic illustration of an example filtration system incorporating at least one aspect of the present invention;
Fig. 2 illustrates a side view of an example filter cartridge of the system of Fig. 1 showing a geometry in accordance with at least one aspect of the present invention;
Fig. 3 is an enlarged, cross-sectional view of the filter cartridge taken along line 3-3 of

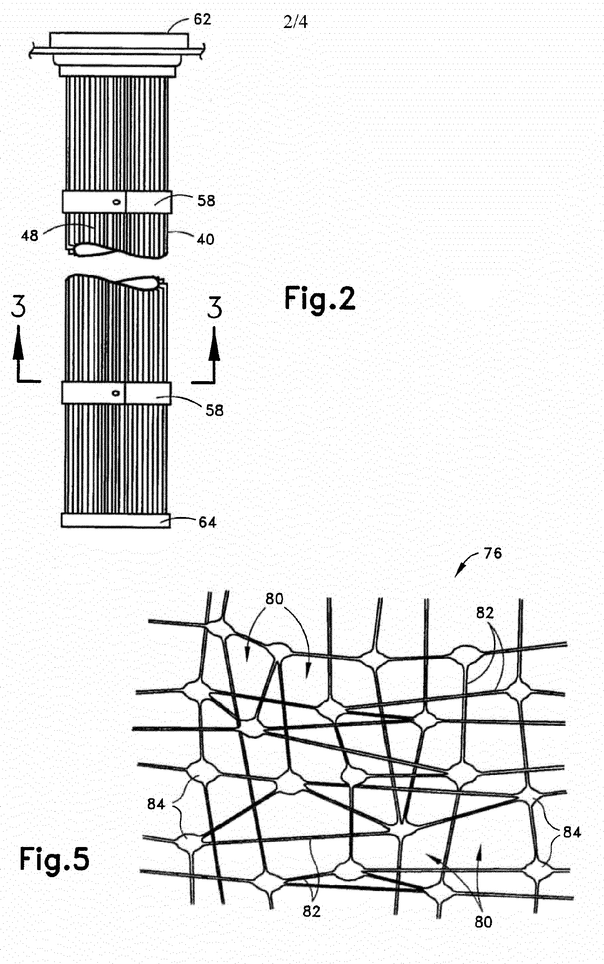

Fig. 2 and shows an accumulation of fly ash and/or activated carbon upon the filter cartridge in accordance with at least one aspect of the present invention;

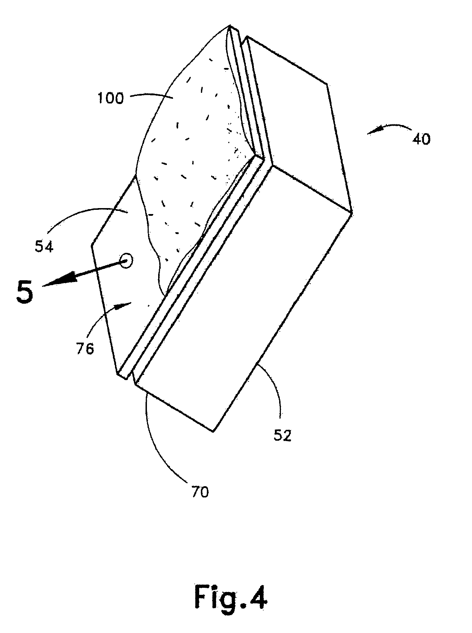

Fig. 4 is an enlarged, cross-sectional view of the filter cartridge taken along line 4-4 of

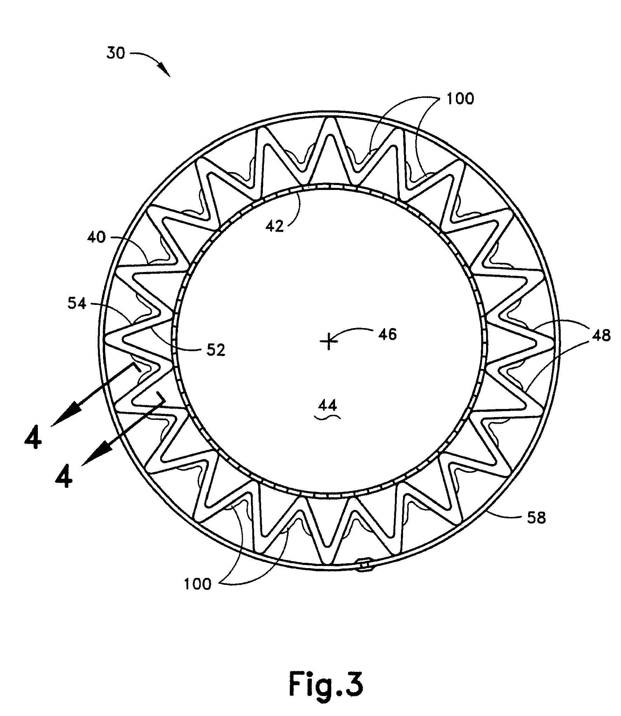

Fig. 3 and shows the accumulation of fly ash and/or activated carbon upon an ePTFE layer of the filter cartridge in accordance with at least one aspect of the present invention; and
Fig. 5 is an enlarged view of a portion of the ePTFE layer of the filter cartridge from the encircled area designated 5 in Fig. 4.

### DETAILED DESCRIPTION OF EMBODIMENTS OF THE INVENTION

Example embodiments that incorporate one or more aspects of the present invention are described and illustrated in the drawings. These illustrated examples are not intended to be a limitation on the present invention. For example, one or more aspects of the present invention can be utilized in other embodiments and even other types of devices. Moreover, certain terminology is used herein for convenience only and is not to be taken as a limitation on the present invention. Still further, in the drawings, the same reference numerals are employed for designating the same elements.

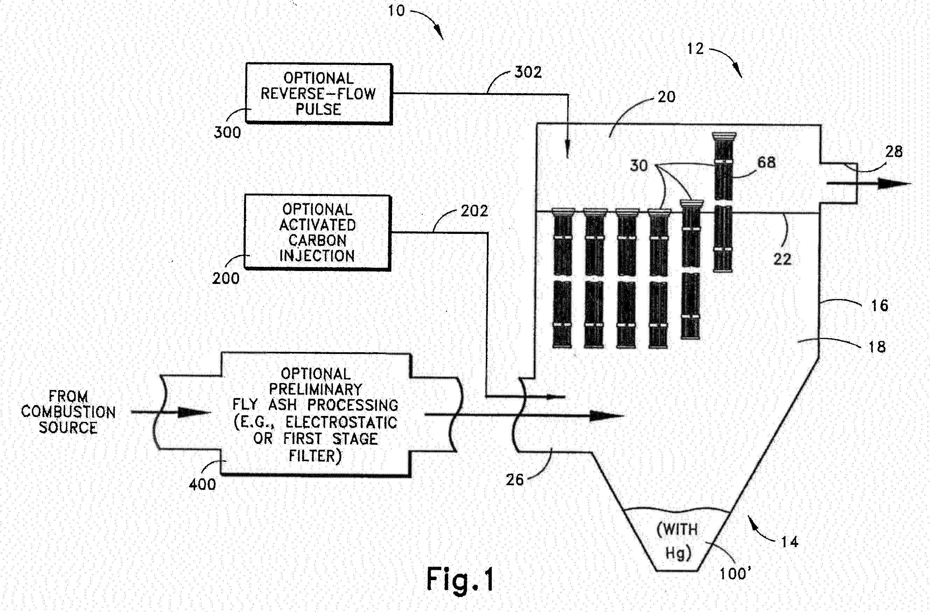

Fig. 1 schematically shows a system 10 for processing combustion exhaust and specifically for providing improved mercury removal from the flow that contains the combustion exhaust. The combustion exhaust from the source contains particulate matter. So, the combustion itself and the direction of the combustion exhaust can be considered to be an arrangement for providing at least some particulate matter. The shown example includes a filtration arrangement 12 for filtering particulate from the combustion exhaust. The particulate includes a material that is commonly referred to as fly ash. Typical fly ash mass mean diameter is on the order of 10-20 microns.

Within the shown example, the filtration arrangement 12 includes a baghouse 14. The baghouse 14 may be defined by an enclosed housing 16 and can be divided into two sections, a dirty air plenum 18 and a clean air plenum 20. The dirty air plenum 18 and the clean air plenum 20 may be placed in fluid communication with each other and separated by a tubesheet 22, which is a wall, a divider, or the like. The dirty air plenum 18 is in fluid communication with a dirty air inlet port 26 allowing the flow to enter the baghouse 14 through the dirty air inlet port. Thus, at a minimum, the dirty air inlet port 26 is part of the arrangement for providing/introducing at least some particulate matter into the filtration arrangement 12. The clean air plenum 20 is in fluid communication with a clean air outlet port 28 allowing filtered air to exit the baghouse 14 through the clean air outlet port.

The dirty air plenum 18 and the clean air plenum 20 may be arranged in fluid communication via one or more circular openings formed in the tubesheet 22. Each opening may be sized to accept and hold a filter cartridge 30. Two of the filter cartridges 30 are raised off of the tubesheet to show that the filter cartridges 30 are inserted into the tubesheet 22. The tubesheet 22 prevents the passage of air through the tubesheet. Instead, air may pass from the dirty air plenum 18 to the clean air plenum 20 through the filter cartridges 30. It is to be appreciated that the baghouse 14 may be varied and the presented example is not to be taken as a limitation upon the present invention. In particular, although filter cartridges are shown, a different type of filter in accordance with an aspect of the present invention may be utilized. Also, although only six filter cartridges 30 are shown, the filtration arrangement 12 may include any number (i.e., one or more) of filter cartridges 30.

Each example filter cartridge 30 is generally elongate may be arranged parallel (e.g., axes of elongation) to each other in a substantially vertical manner. The filter cartridges 30 are capable of filtering air to remove particulate matter, possibly including fly ash, from the combustion exhaust.

As shown in Figs. 2 and 3, a representative example filter cartridge 30 includes a filter media 40 in accordance with one aspect of the present invention. In the shown example, the filter media 40 is arranged around an inner core 42 (Fig. 3). The inner core 42 defines an elongated central passageway 44 formed within the filter cartridge 30. The elongation is along a center axis 46. The inner core 42 may be made of a number of different metal materials, such as steel, titanium, or the like, and may be sufficiently stiff to provide some support to the filter cartridge 30. The core 42 includes openings on its surface to allow for the passage of air through the core. For instance, the core 42 may include a plurality of perforations, apertures, holes, etc. to allow air to pass from the exterior of the core to the central passageway 44.

In the shown example (Figs. 2 and 3), the filter media 40 is arranged as a tube to encircle the inner core 42 and has a plurality of pleats 48. The pleats 48 are elongated parallel to the axis and extent in a zigzag pattern toward and way from the center axis 46. The segments between the pleat bends are essentially flat segments. The filter media 40 has an inner surface 52 and an outer surface 54. In the shown embodiment, a portion of the inner surface 52 engages and/or is adjacent to the inner core at the radially inward extent of the pleats 48.

In the shown example, the filter cartridge 30 includes one or more retaining straps 58 used to hold and/or secure the filter media 40 in place. Such retaining straps may include a number of materials with a high tensile strength, including an extruded polymer, woven polyester, metal, high temperature fabric, etc. Also, such retaining straps may be secured around the circumference of the filter media in a number of locations, such as at a central position between the bottom and top of the filter cartridge. Similarly, more than one retaining strap may be provided for securing the filter media, as in the shown example, two retaining straps are used. It is to be appreciated that other structures may be present on the filter cartridge 30.

The filter cartridge 30 may also include one or more end caps 62, 64 (upper and lower) at either or both ends of the filter cartridge. The end caps 62, 64 may act to allow and/or prevent the passage of air through an end of the filter cartridge and ensure that flow is only through the filter media 40 to aid the filtering process. The caps may include rigid members, seals, etc. as will be appreciated by the person of ordinary skill in the art. Also in the shown example, the lower end cap 64 provides for complete blocking, whereas the upper end cap 62 provides for perimeter sealing and is open at a center to permit air flow out from the central passageway 44.

Attention is directed to Fig. 4, which shows particulars of one example composite filter media 40 in accordance with at least one aspect of the present invention. The filter media 40 includes a layer of expanded polytetrafluoroethylene (ePTFE) membrane layer 76. It is to be appreciated that the ePTFE membrane layer 76 may be supported by other structures/layers of the filter media. For example, the filter media may include a media substrate layer 70. The media substrate layer 70 may include a variety of materials and/or constructions. For example, the media substrate layer 70 may include the following materials: polytetrafluoroethylene (PTFE), polyethylene, polyphenylene sulfide (PPS), and/or glass fibers. Also for example, the media substrate layer 70 may include a single, mono-material layer, multiple material layers, and/or other structures. It is to be appreciated that the media substrate layer 70 need not be a limitation upon the present invention.

It is to be appreciated that the media substrate layer 70 provides rigidity to the filter media 40. Such rigidity permits the filter media 40 to be formed into a shape and to retain the formed shape. In particular, the filter media 40 may be formed and retained in a shaped that is pleated as shown with Figs. 2 and 3.

Turning again to Fig. 4, the ePTFE membrane layer 76 is located at the "dirty" side of the composite filter media 40. As such the outer surface 54 of the filter media 40 is at the ePTFE membrane layer 76 and the inner surface of the filter media is at the media substrate layer 70. The lamination of the ePTFE membrane layer 76 to the media substrate layer 70 may be provided by thermal or adhesive bonding. The ePTFE membrane layer 76 is a layer that is much thinner than the media substrate layer 70. Also, the ePTFE membrane layer 76, by itself (i.e., not laminated to the media substrate layer 70), has little or no rigidity.

As mentioned, the composite filter media may be formed in a generally tubular shape and include a number of pleats. The inner surface of the pleats may be positioned adjacent to the inner core while the outer surface may be adjacent to the retaining straps. The composite filter media is rigid to retain the shape (i.e., cylindrical).

As shown in Fig. 5, the ePTFE membrane layer 76 has a generally open micro-porous construction. The ePTFE material has pores 80 which are micro-pores. The substrate has a microscopic structure that is based upon fibrils 82 that extend and interconnect nodes 84 (only some are identified with the reference numbers 82, 84, respectively). The fibrils 82 and nodes 84 define the pores 80. In some examples, the pores 80 may be in the range of 0.01 microns to 10 microns in diameter.

Turning to Figs. 3 and 4 it is to be noted that a certain amount of particulate matter 100 is accumulated on the outer surface 54 the filter media 40 and in particular on the ePTFE membrane layer 76 of the filter media. It is to be appreciated that the particulate matter 100 may include fly ash from the combustion exhaust. However, other particulate matter may be present upon the ePTFE membrane layer 76. Upon review of Fig. 3, it should be noted that the geometry provided by the pleats 48 of the filter cartridge 30 provide a location for accumulation of the particulate matter 100. Thus, the ePTFE membrane layer 76 is configured to have a geometry that retains at least some accumulated particulate matter 100.

It is the presence of the ePTFE membrane layer 76 in conjunction with the presence of the particulate matter 100, which is present to due the geometry (e.g., pleats 48) that provide for improved capture of mercury within the combustion exhaust. Specifically it has been noted that mercury within combustion exhaust is typically elemental mercury. Such elemental mercury does have an ability to pass through some previous types of filter arrangements. However, it should also be noted that the combustion exhaust typically includes hydrochloric acid (HCl). It is theorized that the specific structure of the ePTFE membrane layer 76 (e.g., micro pores defined by fibrils 82 and nodes 84) provide a suitable surface area onto which the hydrochloric acid within the combustion exhaust can collect. It is further theorized that the hydrochloric acid can oxidize the elemental mercury into mercuric chloride.

It is still further theorized that the presence of the particulate matter 100, which is present due to the geometry (e.g., pleats 48) provides a substance that captures the created mercuric chloride. As such, the overall amount of mercury that is entrapped by the filtration arrangement 12 is relatively high. See the example within Fig. 1 which shows a representative accumulation of the particulate matter 100' that is accumulated within the dirty air plenum 18 of the filtration arrangement 12.

It should be noted that some prior art approaches to capture mercury within a combustion exhaust have included the introduction of a sorbent into the combustion exhaust. The sorbent is often activated carbon which is capable of absorbing or capturing the mercury.

Turning back to the example system shown within Fig. 1, it is to be appreciated that such an optional arrangement 200 for introducing a sorbent 202 (e.g., activated carbon) is provided. To be clear, the introduction or injection of such activated carbon as a sorbent 202 is optional. It is contemplated that the optional arrangement 200 can be part of an arrangement for providing at least some particulate matter in the flow for accumulation. Examples of such arrangement 200 include storage units for holding sorbent (e.g., carbon), metering/delivery components, and similar/corresponding components. Such are examples of means to introduce sorbent into the combustion exhaust.

In general, the introduction or injection of activated carbon 202 into combustion exhaust certainly has a potential benefit of aiding to capture mercury. However, the introduction of such a sorbent 202 may have consequences. In particular, the introduced activated carbon 202 may mix with the fly ash that is being captured by the filtration arrangement 12. It should be noted that fly ash may have value as a byproduct of the filtration of the combustion exhaust. For example, fly ash may be sold for use in production of cement. However, the presence of activated carbon within the fly ash may have a consequence of rendering the fly ash to be less desirable for use in such cement production. Thus, the use of activated carbon may have a consequence of reduced revenues that may have been generated from the collection and sale of fly ash. Moreover, activated carbon itself has a cost of acquisition. It is easily understood that the overall cost of the activated carbon is proportional to amount of activated carbon that is utilized.

Also, it should be noted that the activated carbon is introduced from the optional arrangement 200 as a particulate. In general, the particulate of the activated carbon is of a smaller size then the size of the particulate of the fly ash. It should be appreciated that without the presence of the ePTFE membrane layer 76, the activated carbon may pose a problem concerning penetration into and blockage of the media substrate layer 70. However, in accordance with an aspect of the present invention, the ePTFE membrane layer 76 does not permit excessive penetration of either the particulate matter 100 (e.g., the activated carbon, if present, or the fly ash) into the ePTFE membrane layer 76. In distinction, the particulate matter 100 (e.g., fly ash and/or the activated carbon) remains predominantly on an outer surface 54 on the ePTFE membrane layer 76 without significant embedment into the ePTFE membrane layer. Specifically, the particulate matter 100 (e.g., fly ash and/or the activated carbon) is too large to significantly penetrate into the pores of the ePTFE membrane layer 76 because the pores of the membrane layer are smaller that the particles.

Such prevention of significant penetration into ePTFE membrane layer 76 has a benefit in that caking of particulate matter 100 onto the filter media 40 of the filter cartridge can be addressed/alleviated. For example, turning attention again to the example shown within Fig. 1, it is to be appreciated that an optional known reverse flow arrangement 300 is schematically shown. Such arrangement 300 has an ability to provide fluid (e.g., air) 302 in a reverse flow direction (with the "reverse" direction being with regard to the flow from the combustion exhaust proceeding through the filtration arrangement). The reverse flow fluid 302 can dislodge and remove accumulated (e.g., caked) particulate matter (e.g., fly ash and/or activated carbon) from the filter cartridge 30. Such removed "cake" from the filter cartridge 30 can then accumulate as shown by reference numeral 100' at the bottom of the dirty air plenum 18. Examples of such arrangement 300 include compressors, compressed air reservoirs, air directing components and similar/associated structures. Such are examples of means for introducing a reverse-flow through the filtration arrangement to remove accumulated particulate matter.

Despite the fact that "caked" particulate is removed, nonetheless, the geometry (e.g., such as the pleats 48) of the filter cartridge 30 provides for at least some of the particulate matter to remain on the filter media 40, and in particular the ePTFE membrane layer 76, subsequent to the reverse-flow cleaning. As mentioned, it is theorized that this presence of particulate matter is part of the process that effectively captures mercury. Specifically, it is theorized that the particulate matter captures mercuric chloride which has been created at the surfaces of the fibrils and nodes of the ePTFE membrane layer 76. Thus, the geometry of the ePTFE membrane layer 76 is theorized to provide a function of retaining at least some particulate matter 100 for the purpose of collecting the mercuric chloride even after a reverse-flow cleaning.

As mentioned, the introduction of activated carbon sorbent 202 is optional. The amount of optional carbon injected can be reviewed and adjusted based upon the volume of mercury present within the exhaust and/or a desired percentage amount of mercury to be captured. In general, the aspects of the present invention of having a layer 76 of ePTFE and geometry (e.g., pleats 48) to retain at least some accumulated particulate matter is believed to provide for capture of approximately 75-80% of the mercury without any carbon introduction. Within one example, it was noted that approximately 78% of mercury was captured without any carbon introduction. Upon adjustment of the amount of activated carbon injection upward, greater amounts of mercury were noted to be captured. Within one example the following was noted: 87% mercury capture via an activated carbon introduction rate of 0.3 pounds/mmacf, 92% mercury capture via an activated carbon introduction rate of 0.6 lbs/mmacf, and 96% mercury capture via an activated carbon introduction rate of 2.0 lbs/mmacf.

It is contemplated that the present invention may so effectively capture mercury that the introduction (e.g., from the optional arrangement 200) of sorbent can be done at a rate of introduction of sorbent at least 80% less than the rate of introduction of sorbent needed to capture a corresponding amount of mercury from the combustion exhaust with the at least one ePTFE layer having the configured geometry being absent. It is moreover contemplated that the present invention may so effectively capture mercury that the introduction (e.g., from the optional arrangement 200) of sorbent can be done at a rate of introduction of sorbent at least 90% less than the rate of introduction of sorbent needed to capture a corresponding amount of mercury from the combustion exhaust with the at least one ePTFE layer having the configured geometry being absent. It is further contemplated that the ePTFE membrane layer 76, with the configured geometry to retain at least some accumulated particulate matter, may be sufficiently effective concerning the mercury that the optional arrangement 200 for providing activated carbon sorbent 202 is not needed (i.e., optional).

As mentioned, the presence of activated carbon may cause some degradation in the quality of the fly ash for potential sale. As such, it is possible to have an optional preliminary fly ash processing arrangement 400 to attempt to obtain larger amounts of fly ash that may be well suited for sale. An example of such an optional arrangement 400 is shown within the example of Fig. 1. Specifically, an optional preliminary fly ash processing arrangement 400 is shown to receive the combustion exhaust from the combustion source prior to the combustion exhaust proceeding to the filtration arrangement 12. Several types of structural components may be included within the optional preliminary fly ash processing arrangement 400 such as an electrostatic precipitator and/or a first stage filter, or other similar structures. Such can be considered to be examples of preliminary means 400, located upstream of the filtration arrangement 12, for removing at least some particulate matter 100 from the combustion exhaust prior to the combustion exhaust proceeding to the filtration arrangement 12.

It should be noted that the particulate matter, such as fly ash and/or possibly activated carbon, which is captured and accumulated within the bag house, typically includes a higher percent of mercury than fly ash accumulated by the optional preliminary fly ash processing arrangement 400. Also, if activated carbon is utilized as an injection to help capture mercury within the filtration arrangement 12, the particulate accumulated 100' within the filtration arrangement 12 will have the activated carbon. As discussed several times, such an accumulation 100' may not be desirable for resale. However, it is possible that this particulate accumulation 100' is a relatively small portion of overall particulate accumulation when one viewed in view of the fly ash which can be accumulated at the optional preliminary fly ash processing arrangement 400. Thus, the valuable by-product of fly ash may be obtained.

In summary, the present invention can provide a method of improving mercury removal from a flow containing combustion exhaust. The method includes providing a filtration arrangement, including providing at least one layer of ePTFE, and configuring the at least one ePTFE layer to have a geometry that retains at least some accumulated particulate matter. The method includes providing at least some particulate matter in the flow for accumulation on the filtration arrangement by the geometry.

The method may further include introducing a reverse-flow through the filtration arrangement to remove accumulated particulate matter, the at least one ePTFE layer retaining the at least some accumulated particulate matter during the reverse-flow via the geometry of the at least one ePTFE layer. The method may include the option of not introducing sorbent into the combustion exhaust, and specifically not introducing activated carbon as a sorbent into the combustion exhaust. The method may include introducing sorbent into the combustion exhaust for the purpose of capturing mercury from the combustion exhaust at the filtration arrangement. However, the method may include that the rate of introduction of sorbent being at least 80%, and possibly 90%, less than the rate of introduction of sorbent needed to capture a corresponding amount of mercury from the combustion exhaust with the at least one ePTFE layer having the configured geometry being absent. The method may include providing preliminary means, located upstream of the filtration arrangement, for removing at least some particulate matter from the combustion exhaust prior to the combustion exhaust proceeding to the filtration arrangement.

Also in summary, the present invention can provide a system for improved mercury removal from a flow containing combustion exhaust. The system includes a filtration arrangement including at least one layer of ePTFE, with the at least one ePTFE layer being configured to have a geometry that retains at least some accumulated particulate matter. The system includes an arrangement for providing at least some particulate matter in the flow for accumulation on the filtration arrangement by the geometry.

The system may further include means for introducing a reverse-flow through the filtration arrangement to remove accumulated particulate matter, and may also be such that the geometry of the at least one ePTFE layer retains at least some accumulated particulate matter during the reverse-flow. The system may also not include means to introduce sorbent, such as activated carbon, into the combustion exhaust. The system may include preliminary means, located upstream of the filtration arrangement, for removing at least some particulate matter from the combustion exhaust prior to the combustion exhaust proceeding to the filtration arrangement. The system may include means for introducing sorbent into the combustion exhaust for the purpose of capturing mercury from the combustion exhaust at the filtration arrangement. The means for introducing sorbent may be such to provide the sorbent a rate of introduction of at least 80%, and possibly 90%, less than the rate of introduction of sorbent needed to capture a corresponding amount of mercury from the combustion exhaust with the at least one ePTFE layer having the configured geometry being absent. The system may further include preliminary means, located upstream of the filtration arrangement, for removing at least some particulate matter from the combustion exhaust prior to the combustion exhaust proceeding to the filtration arrangement.

The invention has been described with reference to the example embodiments described above. Modifications and alterations will occur to others upon a reading and understanding of this specification. Examples embodiments incorporating one or more aspects of the invention are intended to include all such modifications and alterations insofar as they come within the scope of the appended claims.

## Claims

1. A method for improving mercury removal from a flow containing combustion exhaust; the method including:
providing a filtration arrangement (12) including:
providing at least one layer (76) of ePTFE; and
configuring the at least one layer (76) of ePTFE to have a geometry (48) that retains at least some accumulated particulate matter (100); and
providing at least some particulate matter in the flow for accumulation on the filtration arrangement (12) by the geometry (48).

2. A method as set forth in claim 1, further including introducing a reverse-flow (302) through the filtration arrangement (12) to remove accumulated particulate matter, the at least one ePTFE layer (76) retaining the at least some accumulated particulate matter during the reverse-flow (302) via the geometry (48) of the at least one ePTFE layer (76).

3. A method as set forth in claim 1 or claim 2, wherein the method does not include introducing sorbent into the combustion exhaust.

4. A method as set forth in claim 3, wherein the method does not include introducing activated carbon as a sorbent into the combustion exhaust.

5. A method as set forth in any one of claims 1 to 4, wherein the method includes introducing sorbent (202) into the combustion exhaust for the purpose of capturing mercury from the combustion exhaust at the filtration arrangement (12).

6. A method as set forth in claim 5, wherein the rate of introduction of sorbent (202) being at least 80% less than the rate of introduction of sorbent needed to capture a corresponding amount of mercury from the combustion exhaust with the at least one ePTFE layer having the configured geometry being absent.

7. A method as set forth in claim 6, wherein the rate of introduction of sorbent (202) being at least 90% less than the rate of introduction of sorbent needed to capture a corresponding amount of mercury from the combustion exhaust with the at least one ePTFE layer having the configured geometry being absent.

8. A method as set forth in any one of claims 1 to 7, wherein the method includes providing preliminary means (400), located upstream of the filtration arrangement (12), for removing at least some particulate matter from the combustion exhaust prior to the combustion exhaust proceeding to the filtration arrangement (12).

9. A system (10) for improved mercury removal from a flow containing combustion exhaust; the system (10) including:
a filtration arrangement (12) including at least one layer (76) of ePTFE, with the at least one ePTFE layer (76) being configured to have a geometry (48) that retains at least some accumulated particulate matter (100); and
an arrangement (e.g., 26 and/or 200) for providing at least some particulate matter in the flow for accumulation (100) on the filtration arrangement (12) by the geometry (48).

10. A system (10) as set forth in claim 9, further including means for introducing a reverse-flow (302) through the filtration arrangement (12) to remove accumulated particulate matter, and the geometry (48) of at least one ePTFE layer (76) retaining the at least some accumulated particulate matter during the reverse-flow (302).

11. A system (10) as set forth in claim 9 or claim 10, wherein the system (10) does not include means to introduce sorbent into the combustion exhaust.

12. A system (10) as set forth in claim 11, wherein the system (10) does not include means to introduce activated carbon as a sorbent into the combustion exhaust.

13. A system (10) as set forth in any one of claims 9 to 12, wherein the system (10) includes preliminary means (400), located upstream of the filtration arrangement (12), for removing at least some particulate matter from the combustion exhaust prior to the combustion exhaust proceeding to the filtration arrangement (12).

14. A system (10) as set forth in any one of claims 9 to 13, wherein the system (10) includes means (200) for introducing sorbent (202) into the combustion exhaust for the purpose of capturing mercury from the combustion exhaust at the filtration arrangement (12).

15. A system (10) as set forth in claim 14, wherein the means (200) for introducing sorbent (202) provides a rate of introduction of sorbent (202) at least 80% less than the rate of introduction of sorbent needed to capture a corresponding amount of mercury from the combustion exhaust with the at least one ePTFE layer having the configured geometry being absent, and preferably at least 90% less than the rate of introduction of sorbent needed to capture a corresponding amount of mercury from the combustion exhaust with the at least one ePTFE layer having the configured geometry being absent.
